# FASCICULE DE BREVET EUROPEEN

(11) **EP 3 559 737 B1**
(45) Date de publication et mention de la délivrance du brevet: **06.01.2021**
(21) Numéro de dépôt: 17832501.5
(22) Date de dépôt: 22.12.2017
(51) Int. Cl.: G02F 1/35, H01S 3/13, H01S 3/00

(54) **SOURCE LASER TÉRAHERTZ ET PROCÉDÉ D'ÉMISSION DE RADIATIONS TÉRAHERTZ**
TERAHERTZ-LASERQUELLE UND VERFAHREN ZUR EMISSION VON TERAHERTZ-STRAHLUNG
TERAHERTZ LASER SOURCE AND METHOD FOR EMITTING TERAHERTZ RADIATION

(30) Priorité: 22.12.2016 FR 1663145
(43) Date de publication de la demande: 30.10.2019
(73) Titulaire: Centre National de la Recherche Scientifique, 75016 Paris (FR); Observatoire de Paris, 75014 Paris (FR); SORBONNE UNIVERSITE, 75006 Paris (FR)
(72) Inventeur: ACEF, Mohand Ouali, 75013 Paris (FR)
(74) Mandataire: Marks & Clerk France
(86) Numéro de dépôt international: PCT/EP2017/084308
(87) Numéro de publication internationale: WO 2018/115399

(56) Documents cités:
- FR-A1- 3 004 820
- US-A1- 2013 161 541
- TETSUO SASAKI ET AL: "Frequency Stabilized GaP Continuous-Wave Terahertz Signal Generator for High-Resolution Spectroscopy", OPTICS AND PHOTONICS JOURNAL, vol. 04, no. 01, 1 janvier 2014 (2014-01-01), pages 8-13, XP055416539, ISSN: 2160-8881, DOI: 10.4236/opj.2014.41002 cité dans la demande
- GLIESE U: "THz Source Based On Laser Mixing", MICROWAVE PHOTONICS, 2002. INTERNATIONAL TOPICAL MEETING ON NOV 5-8, 2002, PISCATAWAY, NJ, USA,IEEE, 3 septembre 1997 (1997-09-03), pages 87-90, XP032307611, DOI: 10.1109/MWP.1997.740233 ISBN: 978-4-88552-187-4
- MASAHIKO TANI ET AL: "Generation of terahertz radiation by photomixing with dual- and multiple-mode lasers; Generation of terahertz radiation by photomixing with dual- and multiple-mode lasers", SEMICONDUCTOR SCIENCE AND TECHNOLOGY, IOP PUBLISHING LTD, GB, vol. 20, no. 7, 1 juillet 2005 (2005-07-01), pages S151-S163, XP020086536, ISSN: 0268-1242, DOI: 10.1088/0268-1242/20/7/005

## Description

### Domaine technique

La présente description concerne une source laser térahertz (THz) ainsi qu'un procédé d'émission de radiations térahertz.

### Etat de l'art

Les radiations térahertz (THz) sont généralement définies dans la bande de fréquences situées entre 0.3 THz et 10 THz. Leur génération et leur détection suscitent un vif intérêt au vu des nombreuses applications qu'elles permettent comme par exemple la détection de polluants et de matières dangereuses, l'imagerie de surveillance, l'imagerie médicale, les communications THz, etc.

L'émission de radiations THz peut être obtenue directement à partir de sources d'émission que sont par exemple les oscillateurs à ondes inverses (ou BWO selon l'abréviation anglo-saxonne « Backward Wave OScillator »), connus également sous le terme « carcinotrons™ », les lasers moléculaires ou certains lasers solides tels que les lasers à cascade quantique.

Il est également possible d'obtenir des radiations THz indirectement en utilisant des processus de conversion non-linéaire dans des cristaux non linéaires à partir de radiations de fréquences plus accessibles comme les radiofréquences, les micro-ondes, les fréquences visible ou infrarouge. Les processus mis en œuvre sont par exemple la multiplication de fréquences, la rectification optique ou encore le mélange hétérodyne.

L'article « Frequency Stabilized GaP Continous-Wave Terahertz Signal Generator for High-Resolution Spectroscopy » de Sasaki et al (Optics and Photonics Journal, 2014, 4, 8-13) présente ainsi une source THz indirecte, basée sur l'utilisation de deux sources laser accordables dans le proche infrarouge. Les faisceaux issus des deux sources lasers sont superposés spatialement par une lame séparatrice et illuminent un cristal non linéaire de Phosphore de Gallium (GaP) pour générer une radiation THz dont la fréquence correspond à la différence de fréquence ente les fréquences des deux faisceaux lasers incidents. La fréquence THz résultante est accordable en changeant la fréquence de l'une des deux sources lasers accordables. Cette technique permet de produire une émission THz accordable, fonctionnant à température ambiante.

La présente description présente également une source laser THz indirecte, qui, comme dans l'article précédemment décrit, est basée sur la génération de différence de fréquence, et qui présente, par rapport aux dispositifs connus, une excellente stabilité en fréquence ainsi qu'une excellente précision de la connaissance de la fréquence THz émise.

### RESUME

Selon un premier aspect, la présente description concerne une source laser THz comprenant:
- un premier générateur adapté pour l'émission d'au moins une première radiation lumineuse de fréquence w₁ = n wₐ et une deuxième radiation lumineuse de fréquence w₂ = m wₐ, où n et m sont des entiers supérieurs ou égaux à 1 et wₐ est une première fréquence de référence;
- un deuxième générateur adapté pour l'émission d'au moins une première radiation lumineuse de fréquence w₃ = ℓ w_{b} et une deuxième radiation lumineuse de fréquence w₄ = p w_{b}, où ℓ et p sont des entiers supérieurs ou égaux à 1 et w_{b} est une deuxième fréquence de référence différente de la première fréquence de référence wₐ ;
- un cristal non linéaire adapté pour former à partir desdites premières radiations lumineuses émises par chacun des premier et deuxième générateurs, une radiation lumineuse THz générée par différence de fréquences, de fréquence égale à w₅ = n wₐ - ℓ w_{b} et comprise entre 0.3THz et 10THz ; et
- au moins un premier module de stabilisation en fréquence permettant la stabilisation en fréquence d'une desdites deuxièmes radiations émises par l'un des premier et deuxième générateurs sur une transition atomique.

La source laser THz ainsi décrite se trouve de fait stabilisée en fréquence sur une transition atomique ce qui permet d'obtenir non seulement une excellente stabilité en fréquence mais aussi une très bonne précision de la connaissance de la fréquence THz émise. Une telle source laser THz présente aussi l'avantage d'être compacte et compatible avec une utilisation hors laboratoire.

Selon un ou plusieurs exemples de réalisation, les première et deuxième radiations émises par un générateur peuvent être des radiations de même fréquence (e.g. n = m et/ou ℓ = p) ; par exemple il peut s'agir de radiations lumineuses provenant d'une même radiation séparée en deux radiations au moyen d'un élément séparateur. Alternativement, et notamment pour permettre plus de latitude sur le choix des fréquences des radiations utilisées pour la stabilisation d'une part et pour la génération de la radiation THz par différence de fréquence d'autre part, les première et deuxième radiations lumineuses peuvent être obtenues par sommation de fréquence, multiplication de fréquences, différence de fréquences. Dans ce cas, les fréquences des première et deuxième radiations lumineuses émises par un générateur sont multiples l'une de l'autre mais non égales. Dans tous les cas, toutes les radiations lumineuses émises par un générateur peuvent être cohérentes entre elles, c'est-à-dire présenter une relation de phase fixe, de telle sorte que la stabilisation en fréquence d'une radiation lumineuse émise par un générateur entraîne la stabilisation en fréquence des autres radiations lumineuses émises pas ce générateur.

Selon un ou plusieurs exemples de réalisation, la transition atomique est une transition atomique de l'iode, qui présente l'avantage de présenter des transitions parfaitement calibrées en fréquence, et d'un facteur de qualité très élevé dans la gamme visible du spectre électromagnétique (500 nm - 700 nm). D'autres transitions atomiques peuvent être utilisées, par exemple celles de l'acétylène (C₂H₂), de la vapeur d'eau (H₂0), de l'oxygène (0₂), de l'oxyde de carbone (CO), du méthane (CH₄), dans l'IR, ou des atomes de type alcalins dans le visible ou proche infrarouge (par exemple le césium (Cs), le rubidium (Rb), le potassium (K), etc.).

Selon un ou plusieurs exemples de réalisation, lesdites deuxièmes radiations émises par chacun des premier et deuxième générateurs sont stabilisées en fréquence, indépendamment l'une de l'autre, sur une transition atomique. La source laser THz comprend alors un premier et un deuxième modules de stabilisation en fréquence permettant chacun la stabilisation en fréquence, sur une transition atomique, de la deuxième radiation lumineuse émise respectivement par chacun des premier et deuxième générateurs. La stabilisation en fréquence de deux radiations lumineuses émises par chacun des générateurs, de façon indépendante, confère une stabilité en fréquence aux radiations THz générées par différence de fréquence.

Selon un ou plusieurs exemples de réalisation, l'un au moins des premier et deuxième générateurs est accordable en fréquence sur une plage de fréquence supérieure à la largeur de raie de la transition optique, permettant de former une source THz accordable. Si les atomes utilisés pour la stabilisation présentent une série de transitions atomiques distinctes identifiées, il est en effet possible de changer la transition atomique sur laquelle l'un et/ou l'autre des générateurs est stabilisé et de ce fait, modifier la fréquence THz.

Selon un ou plusieurs exemples de réalisation, le premier générateur est adapté pour l'émission d'au moins une troisième radiation lumineuse de fréquence w₆ = q wₐ où q est un entier supérieur ou égal à 1 et le deuxième générateur est adapté pour l'émission d'au moins une troisième radiation lumineuse de fréquence w₇ = r w_{b} où r est un entier supérieur ou égal à 1, avec q w_{a -} r w_{b} multiple ou sous-multiple de n wₐ - ℓ w_{b}. Il est ainsi possible grâce à une mesure de q wₐ - r w_{b}, par exemple dans le domaine micro-ondes ou radiofréquence, de parfaitement connaître la fréquence THz (n wₐ - ℓ w_{b}).

Selon un ou plusieurs exemples de réalisation, la source laser comprend en outre un comparateur de fréquences, appelé également mélangeur de fréquences, adapté pour recevoir d'une part les troisièmes radiations émises respectivement par chacun des premier et deuxième générateurs et d'autre part un signal de référence de fréquence donnée, afin de fournir un signal résultant, par exemple un signal radiofréquence, dont la mesure de la fréquence permet de déterminer la différence de fréquences entre lesdites troisièmes radiations. Le comparateur de fréquences peut être un photo-mélangeur, par exemple de type Schottky. La fréquence de la radiation de référence est par exemple une fréquence micro-onde ou radiofréquence. Il est ainsi possible de connaitre avec exactitude la différence de fréquence entre les troisièmes radiations émises par chacun des premier et deuxième générateurs et ainsi d'augmenter la précision dans la connaissance de la fréquence THz générée.

Selon un ou plusieurs exemples de réalisation, la source laser THz comprend un premier module de stabilisation en fréquence permettant la stabilisation en fréquence de ladite deuxième radiation émise par un premier desdits générateurs sur une transition atomique ; et un module d'asservissement du deuxième générateur sur le premier générateur. Dans ce mode de réalisation, la première radiation lumineuse émise par le deuxième générateur est stabilisée indirectement sur une transition atomique ; cela permet de conserver la stabilité de la radiation THz générée et permet d'introduire une accordabilité continue de la génération THz.

Selon un ou plusieurs exemples de réalisation, le premier générateur est adapté pour l'émission d'au moins une troisième radiation lumineuse de fréquence w₆ = q wₐ où q est un entier supérieur ou égal à 1; le module d'asservissement comprend un premier comparateur de fréquences adapté pour recevoir d'une part la troisième radiation émise par le premier générateur et la deuxième radiation émise par le deuxième générateur et d'autre part un premier signal de référence de fréquence donnée, afin de fournir un premier signal radiofréquence; le module d'asservissement comprend en outre un deuxième comparateur de fréquences adapté pour recevoir ledit premier signal radio fréquence et un deuxième signal de référence radio fréquence de fréquence donnée, afin de fournir un signal de commande caractéristique de la différence de fréquences entre les fréquences du premier signal radiofréquence et du deuxième signal de référence radiofréquence; et un module de commande du deuxième générateur en fonction dudit signal de commande.

Selon un ou plusieurs exemples de réalisation, l'un au moins des premier et deuxième générateurs est un générateur de type « trident » adapté pour générer au moins trois radiations lumineuses de fréquences différentes dans le visible et/ou l'infrarouge, les au moins trois radiations lumineuses présentant une relation de phase fixe entre elles. Un tel générateur, qui permet d'émettre trois radiations en phase de fréquences différentes, est par exemple un générateur de faisceaux laser cohérents infrarouge et visible tel que celui décrit dans le brevet FR3004820.

Selon un deuxième aspect, la présente description concerne un procédé d'émission d'une radiation laser THz comprenant les étapes suivantes :
- générer à partir d'un premier générateur une première radiation lumineuse de fréquence w₁ = n wₐ et une deuxième radiation lumineuse de fréquence w₂ = m wₐ, où n et m sont des entiers supérieurs ou égaux à 1 et wₐ est une première fréquence de référence ;
- générer à partir d'un deuxième générateur une première radiation lumineuse de fréquence w₃ = 1 w_{b} et une deuxième radiation lumineuse de fréquence w₄ = p w_{b}, où p est un entier supérieur ou égal à 1 et w_{b} est une deuxième fréquence de référence différente de wₐ ;
- former à partir desdites premières radiations émises par les premier et deuxième générateurs une radiation lumineuse THz générée par différence de fréquences, de fréquence égale à w₅ = n wₐ - ℓ w_{b} et comprise entre 0.3THz et 10THz;
- stabiliser en fréquence au moins une des deuxièmes radiations lumineuses émises par les premier et deuxième générateurs.

Selon un ou plusieurs exemples de réalisation du deuxième mode de réalisation, le procédé d'émission d'une radiation laser THz comprend en outre les étapes suivantes :
- générer à partir du premier générateur au moins une troisième radiation lumineuse de fréquence w₆ = q wₐ où q est un entier supérieur ou égal à 1 ;
- générer à partir du deuxième générateur au moins une troisième radiation lumineuse de fréquence w₇ = r w_{b} où r est un entier supérieur ou égal à 1, avec q w_{a -} r w_{b} multiple ou sous-multiple de n wₐ - ℓ w_{b} ;
- mesurer q w_{a -} r w_{b} pour en déduire la fréquence de la radiation THz générée.

Selon un ou plusieurs exemples de réalisation du deuxième mode de réalisation, le procédé d'émission d'une radiation laser THz comprend en outre les étapes suivantes :
- varier l'une au moins des première et deuxième fréquences de référence (wₐ et/ou w_{b}) ;
- stabiliser au moins une des premières radiations lumineuses émises par les premier et deuxième générateurs sur au moins une deuxième transition atomique.

Ainsi, en changeant la raie de l'atome sur laquelle sont stabilisées la deuxième et/ou la quatrième radiation, la fréquence THz varie. Ceci permet de générer un spectre discret et dense de radiations THz ultrastables en fréquence.

Selon un ou plusieurs exemples de réalisation du deuxième mode de réalisation, le procédé d'émission d'une radiation laser THz comprend les étapes suivantes:
- stabiliser en fréquence ladite deuxième radiation émise par un premier desdits générateurs sur une transition atomique; et
- asservir le deuxième générateur sur le premier générateur.

### BREVE DESCRIPTION DES DESSINS

D'autres avantages et caractéristiques de l'objet de la description apparaîtront à la lecture de la description, illustrée par les figures suivantes :
FIG. 1, un schéma illustrant une source laser THz selon un premier exemple de la présente description dans laquelle chaque générateur émet une radiation lumineuse stabilisée en fréquence sur une transition atomique de façon indépendante;
FIG. 2, un schéma illustrant une source laser THz du type de celle décrite sur la FIG. 1 avec en plus des moyens de mesure de la fréquence de la radiation THz générée;
FIG. 3, un schéma illustrant une source laser THz selon un deuxième exemple de la présente description, dans laquelle une radiation lumineuse émise par un premier générateur est stabilisée en fréquence sur une transition atomique et une radiation lumineuse émise par le deuxième générateur est stabilisée en fréquence sur une radiation lumineuse émise par le premier générateur;
FIGS 4A - AD, des extraits du spectre d'absorption de l'iode, montré avec différentes précisions;
FIG. 5, un schéma illustrant un générateur de type « trident » adapté pour l'émission de plusieurs radiations lumineuses cohérentes entre elles, dans le visible et/ou l'infrarouge.

### DESCRIPTION DETAILLEE

Sur les figures, les éléments identiques sont repérés par les mêmes références.

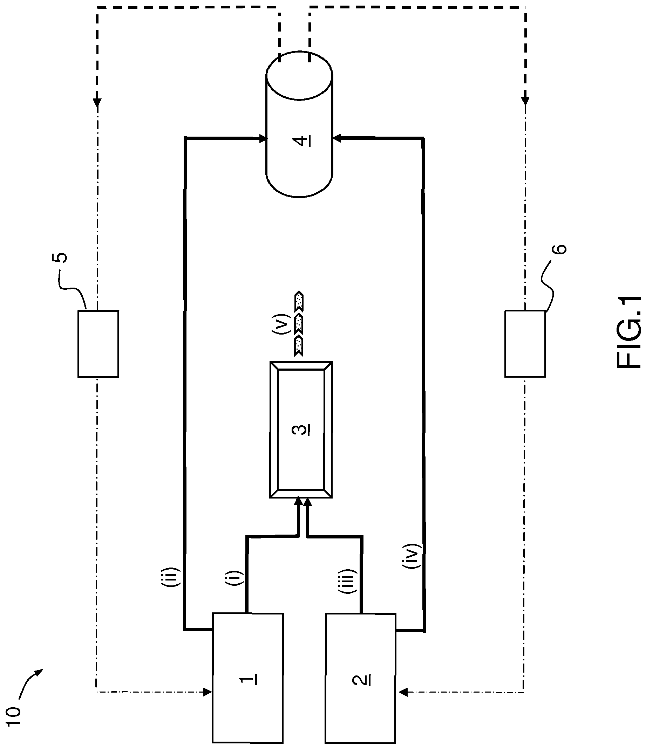

La FIG. 1 illustre un premier exemple d'une source laser THz 10 selon la présente description. Elle comprend un premier générateur 1, un deuxième générateur 2, un cristal non linéaire 3 adapté pour la génération de différence de fréquences, une cellule 4 contenant une vapeur atomique et des modules de stabilisation en fréquence de radiations lumineuses émises par les générateurs 1, 2 sur des transitions atomiques distinctes d'atomes de la cellule 4. Les modules de stabilisation sont schématisés sur la figure par les modules 5, 6 et seront décrits plus en détails par la suite.

Plus précisément, dans l'exemple montré sur la FIG. 1, le premier générateur 1 est adapté pour l'émission d'au moins une première et une deuxième radiations lumineuses référencées (i) et (ii) dont les fréquences sont multiples d'une première fréquence de référence notée wₐ. On peut ainsi définir les fréquences w₁ et w₂ respectivement des première et deuxième radiations lumineuses émises par le premier générateur par w₁ = n wₐ et w₂ = m wₐ, où n et m sont des entiers supérieurs ou égaux à 1. De la même façon, le deuxième générateur 2 est adapté pour l'émission d'au moins une première et une deuxième radiations lumineuses référencées (iii) et (iv) sur la FIG. 1, dont les fréquences sont multiples d'une deuxième fréquence de référence notée w_{b}, différente de la première fréquence de référence wₐ. On peut ainsi définir les fréquences w₃ et w₄ respectivement des première et deuxième radiations lumineuses émises par le deuxième générateur par w₃ = ℓ w_{b} et w₄ = p w_{b}, où ℓ et p sont des entiers supérieurs ou égaux à 1.

Selon la présente description, le cristal non linéaire 3 est adapté pour former à partir desdites premières radiations lumineuses émises par chacun des premier et deuxième générateurs, une radiation lumineuse THz (v) générée par différence de fréquences, de fréquence comprise entre 0.3THz et 10THz. La fréquence w₅ de la radiation lumineuse THz (v) générée est donc définie par w₅ = n wₐ - ℓ w_{b}. Les premières radiations (i) et (iii) émises par le premier et le deuxième générateurs 1, 2 sont par exemple injectées avec une lentille dans le cristal non linéaire 3 ou via un collimateur adapté dans le cas d'un dispositif optique fibré dans lequel les radiations (i) et (ii) sont acheminées par des fibres optiques.

Dans l'exemple de la FIG. 1, la source laser THz comprend un premier module de stabilisation en fréquence, référencé 5, pour la stabilisation en fréquence de la deuxième radiation (ii) émise par le premier générateur 1 sur une transition atomique, et un deuxième module de stabilisation en fréquence 6 pour la stabilisation en fréquence de la deuxième radiation lumineuse (iv) émise par le deuxième générateur 2, sur une transition atomique. Dans l'exemple de la FIG. 1, les stabilisations en fréquence pour les premier et deuxième générateurs sont faites sur des transitions atomiques distinctes d'atomes identiques mais pourraient également être faite sur des transitions atomiques d'espèces atomiques différentes.

Ainsi, deux radiations lumineuses provenant chacune du premier et du deuxième générateur permettent de générer une radiation THz par différence de fréquence dans un cristal non linéaire et deux autres radiations lumineuses provenant chacune du premier et du deuxième générateur permettent la stabilisation en fréquence des radiations lumineuses destinées à générer la radiation THz, ce qui permet à la fois de stabiliser en fréquence la radiation THz générée avec une très grande précision et de parfaitement connaître la fréquence THz générée du fait de la très bonne connaissance des transitions atomiques.

Les atomes utilisés pour la stabilisation en fréquence sont par exemple des atomes d'iode ou des atomes alcalins dans le visible ou proche infrarouge (par exemple Césium Cs, Rubidium Rb, Potassium K). La stabilisation peut également se faire dans l'infrarouge sur des transitions atomiques de molécules comme l'acétylène (C₂H₂), la vapeur d'eau (H₂0), l'oxygène (0₂), l'oxyde de carbone (CO), le méthane (CH₄).

Les transitions atomiques de l'iode moléculaire notamment sont des transitions parfaitement calibrées qui permettent d'avoir une connaissance très précise de la fréquence de la radiation que l'on cherche à stabiliser. De plus, l'iode absorbant entre 500 nm et 700 nm, son utilisation permet un fonctionnement ave une source Er triplé, une source YAG doublé ou une source Yb doublé, qui sont des sources puissantes et compactes, comme cela sera détaillé plus en détails par la suite.

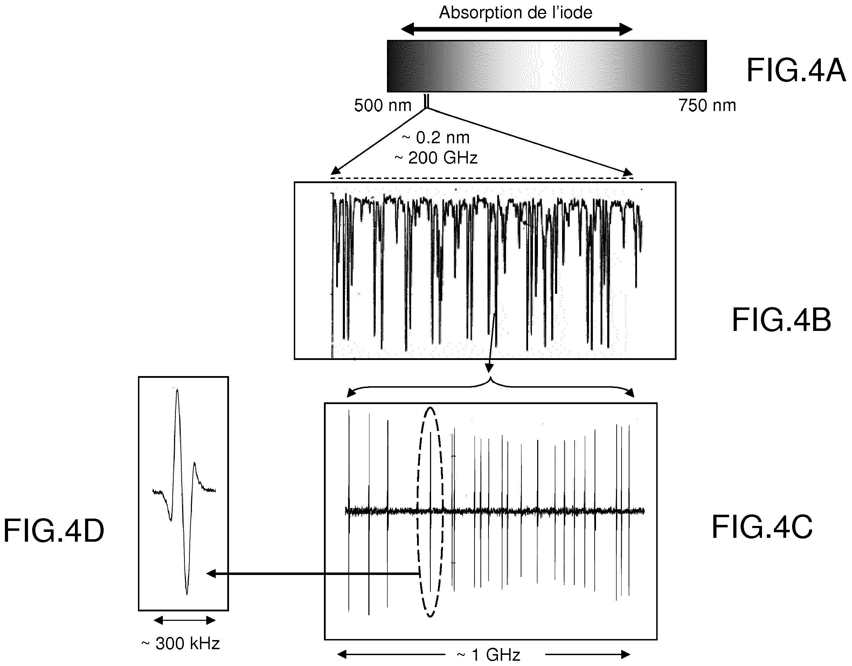

Les FIGS. 4A à 4D représentent à titre d'illustration les raies d'absorption de l'iode entre 500 et 700 nm (FIG. 4A), dans une bande spectrale plus fine d'environ 0.2 nm (200 GHz) autour de 514.5 nm (FIG. 4B), autour de 514.5 nm sur une bande de 1 GHz environ, (FIG. 4C) et à 514.581 nm sur une bande de 300 kHz environ (FIG. 4D). Les raies hyperfines de l'iode sont d'autant plus étroites que l'on se rapproche de la limite de dissociation de la molécule, autour de 500 nm, mais autour de cette valeur, les intensités des raies sont plus faibles. On cherche donc le meilleur compromis entre le facteur de qualité des raies et la nature et la qualité intrinsèque des sources laser disponibles. La FIG. 4B illustre ainsi une portion du spectre d'absorption de l'iode moléculaire dans le vert, qui présente un bon compromis entre le facteur de qualité des raies de l'iode moléculaire (Q∼ 2x10⁹ à 515 nm) et la nature et la qualité intrinsèque des sources laser disponibles. Chaque raie représentée sur la FIG. 4B se décompose en un amas hyperfin qui s'étale sur 1 GHz environ, et dont un exemple est représenté sur la FIG. 4C. La FIG. 4D représente la transition étroite de l'iode à 514,581 nm. Ainsi, plus de 10 000 raies d'absorption saturée de l'iode moléculaire sont identifiées dans la gamme 510 nm - 521 nm, constituant un large peigne de fréquences ultrastables susceptibles d'être utilisées pour stabiliser en fréquence indirectement la source laser THz grâce à la méthode de génération de radiation THz selon la présente description.

Les premier et deuxième modules de stabilisation 5, 6 schématisés sur la FIG. 1 comprennent chacun un module d'interrogation de la transition atomique et un dispositif d'asservissement en fréquence pour le contrôle en fréquence du générateur. Le module d'interrogation fait par exemple appel à la technique connue dite « d'absorption saturée » et décrite par exemple dans l'article de P. H. Lee et al. (« Saturated Neon absorption inside a 6328 A laser », Appl. Phys. Lett., Vol. 10, N°11, 1 june 1967). Celle-ci consiste à interroger la vapeur d'atomes contenue dans la cellule 4 avec deux faisceaux contrapropageants en vue de fabriquer un discriminant de fréquence de grande qualité métrologique. On génère alors un signal d'erreur de symétrie impaire de faible largeur. Le signal d'erreur est envoyé vers un dispositif d'asservissement en fréquence adapté pour agir sur un élément propre au laser, et qui a pour fonction de gouverner la fréquence émise (e.g. céramique piézo électrique, courant de diode, température etc.). On peut ainsi agir sur un élément externe (par exemple variation de la longueur de cavité) ou interne (par exemple variation de la température du générateur, variation du courant d'injection dans le cas d'une diode, etc.) du générateur. Ainsi, le module d'asservissement permet de maintenir constante la fréquence du signal issu du battement électrique pour la stabilisation du générateur.

Il peut être intéressant pour chacun des générateurs 1, 2 d'émettre des premier et deuxième radiations lumineuses de fréquences différentes l'une de l'autre pour pouvoir choisir indépendemment la fréquence de la radiation utilisée pour la stabilisation et celle utilisée pour la génération de la radiation THz. Ainsi, comme expliqué précédemment, une stabilisation sur l'iode moléculaire est réalisée avantageusement dans le vert avec des fréquences comprises entre environ 400 THz et environ 600 THz. Pour la génération de la radiation THz, la différence de fréquences peut se faire à partir de radiations dans l'infrarouge ou dans le visible, par exemple. Un différence de fréquences faite à partir de radiations dans le visible (∼700 - 800 nm) est préferée car les cristaux non linéaires - par exemple à base d'AsGa - sont plus sensibles dans cette gamme de longueurs d'onde, ce qui permet par la suite une génération plus éfficace de radiations THz.

Dans tous les cas, on cherche à s'assurer que les mécanismes d'émission des première et deuxième radiations lumineuses permettent l'émission de radiations cohérentes en phase, c'est-à-dire présentant une relation de phase fixe, afin que la stabilisation en fréquence desdites deuxièmes radiations résulte en une stabilisation en fréquences desdites premières radiations pour la génération de la radiation THz. Ces mécanismes d'émission sont par exemple la multiplication de fréquences, la sommation de fréquences, la différence de fréquences.

Ainsi, chaque générateur peut comprendre, selon un exemple de réalisation, une source d'émission laser présentant une fréquence de référence accordable en longueur d'onde (par exemple un laser à fibre dopée Erbium ou une diode laser) et un ou plusieurs cristaux non linéaires adaptés à la génération d'harmoniques de la fréquence de référence. Le laser à fibre dopée Erbium présente généralement une accordabilité plus importante (accordabilité en longueur d'onde sur environ 1000 pm) que celle de la diode laser (environ 50 pm). La diode laser présente l'avantage de la compacité et la possibilité d'asservissement via le courant d'injection. Le cristal non linéaire est par exemple un cristal en niobate de lithium (LiNbO3). D'autres cristaux peuvent être utilisés de façon connue, comme par exemple le Phosphate de Potassium Titanyl, utilisés en structure polarisé périodiquement (ou PPKTP).

Dans le cas où l'on peut travailler avec des premières et deuxièmes radiations de même fréquence, le générateur peut comprendre une source d'émission laser accordable en longueur d'onde, par exemple un laser à fibre dopée Erbium ou une diode laser, et un élément séparateur pour former les deux radiations lumineuses.

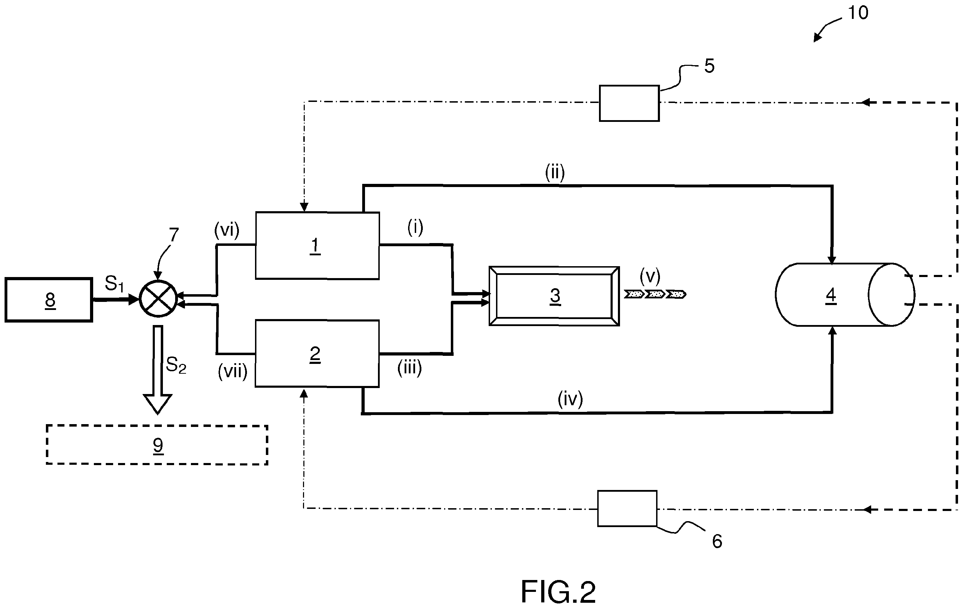

La FIG. 2 illustre un exemple de réalisation d'une source laser THz selon la présente description dans laquelle chacun des générateurs émet, en plus des première et deuxième radiations lumineuses, une troisième radiation lumineuse. Dans cet exemple, comme dans l'exemple de la FIG. 1, la stabilisation en fréquence de chacun des générateurs est réalisée sur une transition atomique distincte.

Ainsi, le premier générateur 1 est adapté pour l'émission d'au moins une troisième radiation lumineuse (vi) de fréquence w₆ = q wₐ où q est un entier supérieur ou égal à 1 et le deuxième générateur 2 est adapté pour l'émission d'au moins une troisième radiation lumineuse (vii) de fréquence w₇ = r w_{b} où r est un entier supérieur ou égal à 1. Comme précédemment, les fréquences des radiations émises par un générateur peuvent être identiques, auquel cas ces radiations sont obtenues au moyen d'un ou plusieurs éléments séparateurs. Alternativement, les fréquences des radiations lumineuses émises par un générateur peuvent être multiples de la fréquence de référence mais non égales. Dans ce cas, on s'assure que le mécanisme de génération des radiations lumineuses permet d'obtenir des radiations lumineuses cohérentes en phase.

Selon un exemple de réalisation, chaque générateur émet une troisième radiation lumineuse et ces radiations lumineuses sont utilisées, comme illustrées sur la FIG. 2, pour mesurer la fréquence THz générée. Pour cela, on s'assurera que qwₐ - rw_{b} est un multiple ou un sous-multiple de nwₐ - ℓw_{b}. Ainsi la connaissance de qwₐ - rw_{b} permettra d'obtenir la valeur de la fréquence de la radiation THz (v).

Selon un exemple de réalisation, la mesure de la différence de fréquences qwₐ - rw_{b} est obtenue au moyen d'un comparateur de fréquences 7, par un exemple un photo-mélangeur de type Schottky, adapté pour recevoir les troisièmes radiations (vi) et (vii) émises par chacun des premier et deuxième générateurs. Le mélangeur 7 reçoit aussi un signal de référence S₁ émis par une source 8, de fréquence donnée f₀, par exemple une fréquence microonde. Il en résulte un signal S₂, par exemple un signal radiofréquence, dont la fréquence est égale à la différence de fréquence Δ₁=[qwₐ- rw_{b}]-k×f₀ ou k est un nombre entier, et f₀ est la fréquence de référence. Un lecteur de fréquences 9 permet par exemple de déterminer la fréquence du signal résultant S₂.

La mesure de la différence de fréquences générée est particulièrement utile dans le cas où l'on cherche à former une source laser THz accordable de fréquence connue avec exactitude. En effet, on peut choisir pour l'un et/ou l'autre des générateurs 1, 2, une source d'émission accordable en fréquence sur une plage de fréquence supérieure à la largeur de raie de la transition optique. Dans ce cas, il sera possible de stabiliser en fréquence la radiation lumineuse utile pour la génération de la radiation THz sur l'une des raies atomiques, par exemple l'une des multiples raies de l'iode moléculaire. La mesure de la différence de fréquences qwₐ - rw_{b} permettra alors de connaître précisément la fréquence de la génération THz. La source THz ainsi formée est accordable et elle peut générer un spectre discret et dense de radiations THz ultrastables en fréquence.

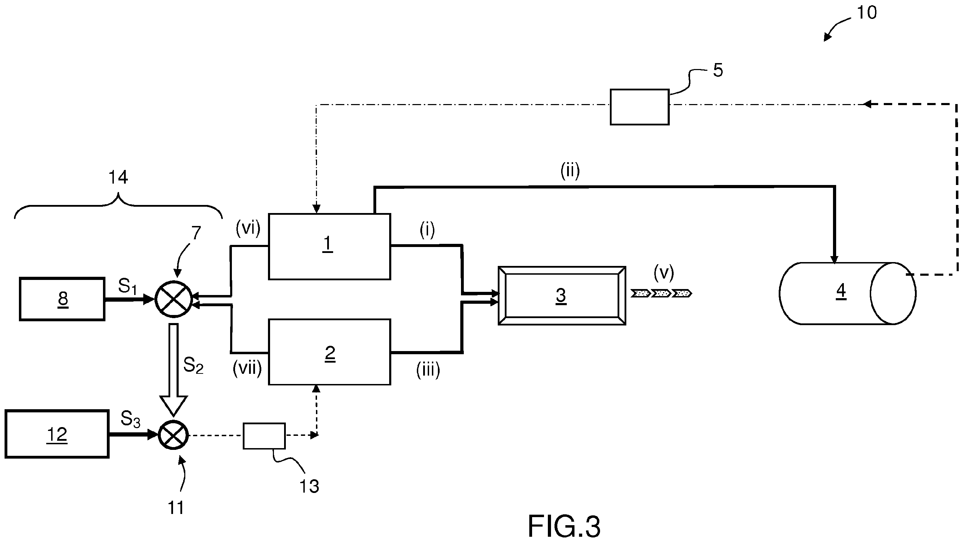

La FIG. 3 décrit un autre exemple de source laser THz selon la présente description.

Dans cet exemple, seul l'un des deux générateurs est stabilisé en fréquence directement sur une transition atomique. Dans l'exemple de la FIG. 3, c'est par exemple le générateur référencé 1 (mais cela pourrait tout aussi bien être l'autre générateur, référencé 2). Ainsi, comme précédemment, la source THz comprend un premier module de stabilisation 5 en fréquence permettant la stabilisation en fréquence de la deuxième radiation (ii) émise par le premier générateur sur une transition atomique d'atomes contenus dans la cellule 4. Le deuxième générateur est quant à lui asservi sur le premier générateur au moyen d'un module d'asservissement 14 dont un exemple de réalisation est décrit ci-dessous.

Comme cela est illustré sur la FIG. 3, le premier générateur est adapté dans cet exemple pour l'émission d'au moins une troisième radiation lumineuse (vi) de fréquence w₆ = q wₐ où q est un entier supérieur ou égal à 1. Comme précédemment, les radiations lumineuses émises par le premier générateur sont soit de fréquence identique, soit cohérentes en phase.

Le module d'asservissement 14 comprend dans cet exemple un premier comparateur de fréquences 7 adapté pour recevoir d'une part la troisième radiation (vi) émise par le premier générateur et la deuxième radiation (vii) émise par le deuxième générateur, et d'autre part un premier signal de référence (S₁), émis par une source 8, de fréquence donnée f₀, par exemple une fréquence microonde ou radiofréquence, afin de fournir un signal S₂, par exemple un signal radiofréquence. Le module d'asservissement comprend par ailleurs un deuxième comparateur de fréquences 11 adapté pour recevoir ledit premier signal radiofréquence S₂ et un deuxième signal de référence radiofréquence S₃, émis par une source 12, de fréquence donnée f₁, afin de fournir un signal de commande (typiquement une tension de commande) caractéristique de la différence de fréquences entre les fréquences du premier signal radiofréquence S₂ et du deuxième signal de référence radiofréquence S₃; plus précisément, la fréquence du signal de commande peut s'écrire Δ₂=([qwₐ - rw_{b}]-k×f₀) - f₁, où k est un entier non nul. Le module d'asservissement comprend également un module de commande 13 du deuxième générateur, par exemple un comparateur en tension, permettant de contrôler la fréquence démission du deuxième générateur en fonction dudit signal de commande.

Ainsi dans cet exemple, une stabilisation en fréquence de la source THz est également obtenue de façon ultrastable par stabilisation sur une transition atomique, mais de façon indirecte pour l'un des générateurs.

Cet exemple permet notamment la formation d'une radiation THz continûment accordable. En effet, quand la fréquence f₁ du deuxième signal de référence radiofréquence S₃ varie et que le module d'asservissement fonctionne en boucle fermée (Δ₂=0), la fréquence rw_{b} va varier dans les mêmes proportions que la fréquence f₁ du deuxième signal de référence pour maintenir la condition Δ₂=0. Par conséquent la fréquence THz sera continument variable et de façon contrôlée. Par ailleurs la fréquence THz sera connue et possédera la même stabilité que celle des radiations qui la composent car en régime fermé w₇ = qwₐ - k×f₀ - f₁.

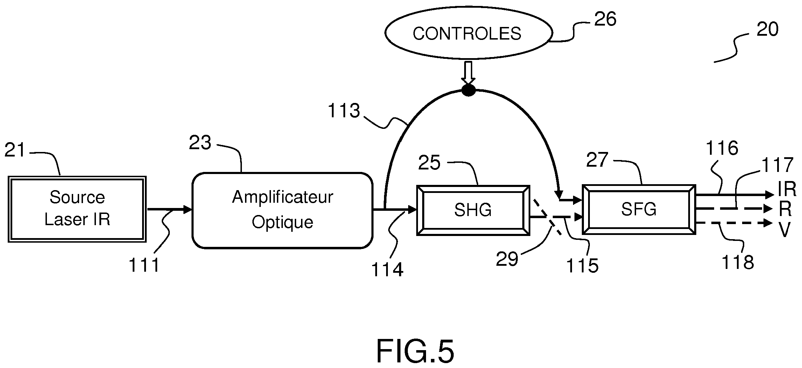

Dans les cas où l'on cherche à générer trois radiations lumineuses de fréquences multiples d'une même fréquence de référence, mais différentes, on pourra utiliser un générateur de type « trident » tel que représenté sur la FIG. 5 et décrit dans le brevet publié FR3004820B. Ce générateur permet en effet de générer trois radiations lumineuses cohérentes en phase, par exemple dans le visible et/ou l'infrarouge.

Plus précisément, le générateur de faisceaux laser cohérents 20 écrit sur la FIG. 5 comprend une source laser continue 21, par exemple une source infrarouge, un amplificateur optique 23, un cristal doubleur de fréquence ou SHG (pour « Second Harmonie Génération ») 25 et un cristal générateur de somme de fréquences ou SFG (pour « Sum-Frequency Generation ») 27. L'amplificateur optique, par exemple un amplificateur à fibre dopé Erbium, permet de fournir la puissance optique nécessaire lorsque la puissance d'émission de la source laser est insuffisante. L'amplificateur peut également être intégré dans la source. Il est également possible de s'affranchir d'un amplificateur optique si la puissance optique d'émission de la source est suffisante. Le faisceau laser 111 émis par la source laser infrarouge 11 et amplifié au moyen de l'amplificateur optique 23 est séparé en deux faisceaux 113 et 114, le ratio des puissances optiques sur chacune des voies pouvant être optmisé en fonction des puissances requises en aval dans le générateur. Le premier faisceau 114 est directement couplé dans le premier cristal non linéaire 25 pour générer un faisceau laser 115, harmonique 2 dans le rouge du premier faisceau 114, de longueur d'onde le 772 nm par exemple. Le second faisceau IR 113, qui n'a pas traversé le premier cristal non linéaire 25, est superposé au faisceau 115 généré précédemment dans le rouge, les deux faisceaux 113 et 115 étant couplés dans le second cristal non linéaire 27 pour réaliser la somme de fréquences Rouge et infrarouge IR, résultant en un faisceau 118 de longueur d'onde visible, à 515 nm par exemple. Les autres faisceaux 116 et 117 issus du deuxième cristal non linéaire 27 sont les faisceaux résiduels repsectivement dans l'infrarouge et dans le rouge. Avantageusement, un module de contrôle 26 permet de contrôler des paramètres de couplage du deuxième faisceau IR 113 en vue du couplage dans le deuxième cristal non linéaire 27, ces paramètres pouvant être des paramètres géométriques, de polarisation et/ou de puissance. Un asservissement en température des cristaux non linéaires peut également être effectué pour assurer l'optimisation du fonctionnement de ces cristaux. Le module de contrôle peut comprendre en particulier des moyens de contrôle de la puissance optique du faisceau IR en entrée du cristal non linéaire 27 générateur de somme de fréquences, asservis sur la puissance optique de sortie dans le vert (faisceau 118). Le générateur ainsi décrit permet l'émission de trois radiations optiques cohérentes en phase (car issues du même faisceau laser infrarouge) dans la bande verte du spectre visible en même temps que dans les bandes IR et Rouge. Le générateur 20 peut fonctionner dans un mode de propagation des faisceaux en espace libre ou en espace fibré.

Ainsi, dans l'exemple de la FIG. 2 par exemple, lorsque deux générateurs de type « tridents » sont utilisés, on pourra choisir :
Pour la première radiation lumineuse (i) issue du premier générateur, w₁ = 2 wₐ ;
Pour la deuxième radiation lumineuse (ii) issue du premier générateur, w₂ = 3 wₐ ;
Pour la troisième radiation lumineuse (vi) issue du premier générateur, w₆ = wₐ ;
Pour la première radiation lumineuse (iii) issue du deuxième générateur, w₃ = 2 w_{b} ;
Pour la deuxième radiation lumineuse (ii) issue du deuxième générateur, w₄ = 3 w_{b} ;
Pour la troisième radiation lumineuse (vi) issue du deuxième générateur, w₇ = w_{b} ;

Où w_{b} et wₐ sont des fréquences de référence différentes respectivement des premier et deuxième générateurs.

Ainsi, si w_{b} et wₐ sont des fréquences infrarouges par exemple, il en résultera une stabilisation en fréquence des générateurs sur des radiations lumineuses dans le vert, et la génération de la radiation THz (v) au moyen de radiations dans le rouge.

Bien que décrite à travers un certain nombre d'exemples de réalisation détaillés, le procédé et la source laser THz selon la présente description comprennent différentes variantes, modifications et perfectionnements qui apparaîtront de façon évidente à l'homme de l'art, étant entendu que ces différentes variantes, modifications et perfectionnements font partie de la portée de l'objet de la présente description, telle que définie par les revendications qui suivent.

## Revendications

1. Source laser THz (10) comprenant :
- un premier générateur (1) adapté pour l'émission d'au moins une première radiation lumineuse (i) de fréquence w₁ = n wₐ et une deuxième radiation lumineuse (ii) de fréquence w₂ = m wₐ, où n et m sont des entiers supérieurs ou égaux à 1 et wₐ est une première fréquence de référence;
- un deuxième générateur (2) adapté pour l'émission d'au moins une première radiation lumineuse (iii) de fréquence w₃ = ℓ w_{b} et une deuxième radiation lumineuse (iv) de fréquence w₄ = p w_{b}, où ℓ et p sont des entiers supérieurs ou égaux à 1 et w_{b} est une deuxième fréquence de référence différente de la première fréquence de référence wₐ ; et
- un cristal non linéaire (3) adapté et arrangé pour former à partir desdites premières radiations lumineuses émises par chacun des premier et deuxième générateurs, une radiation lumineuse THz (v) générée par différence de fréquences, de fréquence égale à w₅ = n wₐ - ℓ w_{b} et comprise entre 0.3THz et 10THz;
- au moins un premier module de stabilisation en fréquence configuré pour permettre la stabilisation en fréquence d'une desdites deuxièmes radiations émises par l'un des premier et deuxième générateurs sur une transition atomique.

2. Source laser THz selon la revendication 1, comprenant un premier et un deuxième modules de stabilisation en fréquence chacun étant configuré pour permettre la stabilisation en fréquence, sur une transition atomique, de la deuxième radiation lumineuse émise respectivement par chacun des premier et deuxième générateurs.

3. Source laser THz selon la revendication 2, dans laquelle
- le premier générateur (1) est adapté pour l'émission d'au moins une troisième radiation lumineuse (vi) de fréquence w₆ = q wₐ où q est un entier supérieur ou égal à 1 ;
- le deuxième générateur (2) est adapté pour l'émission d'au moins une troisième radiation lumineuse (vii) de fréquence w₇ = r w_{b} où r est un entier supérieur ou égal à 1, avec q w_{a -} r w_{b} multiple ou sous-multiple de n wₐ - ℓ w_{b}.

4. Source laser THz selon la revendication 3, comprenant en outre un comparateur de fréquences (7) adapté pour recevoir les troisièmes radiations émises par chacun des premier et deuxième générateurs ainsi qu'un signal de référence (S₁) de fréquence donnée (f₀), afin de fournir un signal résultant (S₂) radiofréquence dont la fréquence permet de déterminer la différence de fréquences entre lesdites troisièmes radiations.

5. Source laser THz selon l'une quelconque des revendications 2 à 4, dans laquelle l'un au moins des premier et deuxième générateurs est accordable en fréquence sur une plage de fréquence supérieure à la largeur de raie de la transition optique, permettant de former une source THz accordable.

6. Source laser THz selon la revendication 1, comprenant :
- un premier module de stabilisation en fréquence (5) configuré pour permettre la stabilisation en fréquence de ladite deuxième radiation (ii) émise par un premier desdits générateurs sur une transition atomique; et
- un module d'asservissement (14) du deuxième générateur sur le premier générateur.

7. Source laser THz selon la revendication 6, dans laquelle :
- ledit premier générateur est adapté pour l'émission d'au moins une troisième radiation lumineuse (vi) de fréquence w₆ = q wₐ où q est un entier supérieur ou égal à 1 ;
- le module d'asservissement comprend :
∘ un premier comparateur de fréquences (7) adapté pour recevoir la troisième radiation (vi) émise par le premier générateur et la deuxième radiation émise par le deuxième générateur ainsi qu'un premier signal de référence (S₁) de fréquence donnée (f₀), afin de fournir un premier signal radiofréquence (S₂) ; et
∘ un deuxième comparateur de fréquences (11) adapté pour recevoir ledit premier signal radiofréquence (S₂) et un deuxième signal de référence radiofréquence (S₃) de fréquence donnée (f₁), afin de fournir un signal de commande caractéristique de la différence de fréquences entre les fréquences du premier signal radiofréquence (S₂) et du deuxième signal de référence radiofréquence (S₃) ;
∘ un module de commande (13) du deuxième générateur en fonction dudit signal de commande.

8. Source laser THz selon la revendication 7, dans laquelle le deuxième générateur est accordable et la fréquence du deuxième signal de référence radiofréquence (S₃) est variable pour former une source THz accordable.

9. Source laser THz selon l'une quelconque des revendications précédentes, dans laquelle l'un au moins des premier et deuxième générateurs est un générateur de type « trident » adapté pour générer au moins trois radiations lumineuses de fréquences différentes dans le visible et/ou l'infrarouge, les au moins trois radiations lumineuses présentant une relation de phase fixe entre elles.

10. Source laser THz selon l'une quelconque des revendications précédentes, dans laquelle ladite transition atomique est une transition atomique de l'iode.

11. Procédé d'émission d'une radiation lumineuse THz comprenant les étapes suivantes :
- générer à partir d'un premier générateur (1) une première radiation lumineuse (i) de fréquence w₁ = n wₐ et une deuxième radiation lumineuse (ii) de fréquence w₂ = m wₐ, où n et m sont des entiers supérieurs ou égaux à 1 et wₐ est une première fréquence de référence ;
- générer à partir d'un deuxième générateur (2) une première radiation lumineuse (iii) de fréquence w₃ = 1 w_{b} et une deuxième radiation lumineuse (iv) de fréquence w₄ = p w_{b}, où p est un entier supérieur ou égal à 1 et w_{b} est une deuxième fréquence de référence différente de wₐ ;
- former à partir desdites premières radiations émises par les premier et deuxième générateurs une radiation lumineuse THz (v) générée par différence de fréquences, de fréquence égale à w₅ = n wₐ - ℓ w_{b} et comprise entre 0.3THz et 10THz;
- stabiliser en fréquence au moins l'une des deuxièmes radiations lumineuses émises par les premier et deuxième générateurs.

12. Procédé d'émission d'une radiation laser THz selon la revendication 11, comprenant en outre les étapes suivantes :
- générer à partir du premier générateur (1) au moins une troisième radiation lumineuse (vi) de fréquence w₆ = q wₐ où q est un entier supérieur ou égal à 1 ;
- générer à partir du deuxième générateur (2) au moins une troisième radiation lumineuse (vii) de fréquence w₇ = r w_{b} où r est un entier supérieur ou égal à 1, avec q w_{a -} r w_{b} multiple ou sous-multiple de n wₐ - ℓ w_{b} ;
- mesurer q w_{a -} r w_{b} pour en déduire la fréquence de la radiation THz générée.

13. Procédé d'émission d'une radiation laser THz selon l'une quelconque des revendications 11 et 12, comprenant en outre les étapes suivantes:
- varier l'une au moins des première et deuxième fréquences de référence (wₐ et/ou w_{b}) ;
- stabiliser au moins l'une des premières radiations lumineuses émises par les premier et deuxième générateurs sur au moins une deuxième transition atomique.

14. Procédé d'émission d'une radiation laser THz selon la revendication 11, comprenant les étapes suivantes:
- stabiliser en fréquence ladite deuxième radiation émise par un premier desdits générateurs sur une transition atomique; et
- asservir le deuxième générateur sur le premier générateur.

## Patentansprüche

1. THz-Laserquelle (10), die Folgendes umfasst:
- einen ersten Generator (1), der zum Aussenden mindestens einer ersten Lichtstrahlung (i) mit der Frequenz w₁ = n wₐ und einer zweiten Lichtstrahlung (ii) mit der Frequenz w₂ = m wₐ ausgelegt ist, wobei n und m ganze Zahlen gleich oder größer als 1 sind und wₐ eine erste Referenzfrequenz ist;
- einen zweiten Generator (2), der zum Aussenden mindestens einer ersten Lichtstrahlung (iii) mit der Frequenz w₃ = ℓ w_{b} und einer zweiten Lichtstrahlung (iv) mit der Frequenz w₄ = p w_{b} ausgelegt ist, wobei ℓ und p ganze Zahlen gleich oder größer als 1 sind und w_{b} eine zweite Referenzfrequenz ist, die sich von der ersten Referenzfrequenz wₐ unterscheidet; und
- einen nichtlinearen Kristall (3), der so ausgelegt und angeordnet ist, dass er durch die ersten Lichtstrahlungen, die von jedem von dem ersten und dem zweiten Generator ausgesendet werden, eine THz-Lichtstrahlung (v) bildet, die durch Frequenzdifferenz erzeugt wird, mit einer Frequenz gleich w₅ = n wₐ - ℓ w_{b}, und die zwischen 0,3 THz und 10 THz liegt;
- mindestens ein erstes Frequenzstabilisierungsmodul, konfiguriert zum Ermöglichen der Frequenzstabilisierung von einer der von dem ersten und dem zweiten Generator ausgesendeten zweiten Strahlungen auf einem Atomübergang.

2. THz-Laserquelle nach Anspruch 1, die ein erstes und ein zweites Frequenzstabilisierungsmodul umfasst, jeweils konfiguriert zum Ermöglichen einer Frequenzstabilisierung, auf einem Atomübergang, der jeweils von dem ersten und dem zweiten Generator ausgesendeten zweiten Lichtstrahlung.

3. THz-Laserquelle nach Anspruch 2, wobei
- der erste Generator (1) zum Aussenden mindestens einer dritten Lichtstrahlung (vi) mit der Frequenz w₆ = q wₐ ausgelegt ist, wobei q eine ganze Zahl gleich oder größer als 1 ist;
- der zweite Generator (2) zum Aussenden mindestens einer dritten Lichtstrahlung (vii) mit der Frequenz w₇ = r w_{b} ausgelegt ist, wobei r eine ganze Zahl gleich oder größer als 1 ist, wobei q wₐ - r w_{b} ein Vielfaches oder Subvielfaches von n wₐ - ℓ w_{b} ist.

4. THz-Laserquelle nach Anspruch 3, die ferner einen Frequenzkomparator (7) umfasst, der ausgelegt ist, um die von jedem von dem ersten und dem zweiten Generator ausgesendeten dritten Strahlungen, sowie ein Referenzsignal (S₁) mit einer gegebenen Frequenz (f₀), zu empfangen, um ein resultierendes Hochfrequenzsignal (S₂) zu liefern, dessen Frequenz es ermöglicht, den Frequenzunterschied zwischen den dritten Strahlungen zu bestimmen.

5. THz-Laserquelle nach einem der Ansprüche 2 bis 4, wobei mindestens einer von dem ersten und dem zweiten Generator in einem Frequenzbereich frequenzabstimmbar ist, der größer als die Strahlenbreite des optischen Übergangs ist, so dass eine abstimmbare THz-Quelle gebildet werden kann.

6. THz-Laserquelle nach Anspruch 1, die Folgendes umfasst:
- ein erstes Frequenzstabilisierungsmodul (5), konfiguriert zum Ermöglichen einer Frequenzstabilisierung der von einem ersten der Generatoren ausgesendeten zweiten Strahlung (ii) bei auf Atomübergang; und
- ein Servomodul (14) des zweiten Generators auf dem ersten Generator.

7. THz-Laserquelle nach Anspruch 6, wobei:
- der erste Generator zum Aussenden mindestens einer dritten Lichtstrahlung (vi) mit der Frequenz w₆ = q wₐ ausgelegt ist, wobei q eine ganze Zahl gleich oder größer als 1 ist;
- das Servomodul Folgendes umfasst:
∘ einen ersten Frequenzkomparator (7), der zum Empfangen der vom ersten Generator ausgesendeten dritten Strahlung (vi) und der vom zweiten Generator ausgesendeten zweiten Strahlung sowie eines ersten Referenzsignals (S₁) mit einer gegebenen Frequenz (f₀) ausgelegt ist, um ein erstes Hochfrequenzsignal (S₂) zu liefern; und
∘ einen zweiten Frequenzkomparator (11), der zum Empfangen des ersten Funkfrequenzsignals (S₂) und eines zweiten Funkfrequenzreferenzsignals (S₃) mit einer gegebenen Frequenz (f₁) ausgelegt ist, um ein Steuersignal zu liefern, das für die Frequenzdifferenz zwischen den Frequenzen des ersten Funkfrequenzsignals (S₂) und des zweiten Funkfrequenzreferenzsignals (S₃) charakteristisch ist;
∘ ein Steuermodul (13) des zweiten Generators in Abhängigkeit von dem Steuersignal.

8. THz-Laserquelle nach Anspruch 7, wobei der zweite Generator abstimmbar ist und die Frequenz des zweiten Hochfrequenzreferenzsignals (S₃) variabel ist, um eine abstimmbare THz-Quelle zu bilden.

9. THz-Laserquelle nach einem der vorhergehenden Ansprüche, wobei mindestens einer von dem ersten und dem zweiten Generator ein Generator vom "Dreizack"-Typ ist, der zum Erzeugen von mindestens drei Lichtstrahlungen unterschiedlicher Frequenzen im sichtbaren und/oder Infrarot-Bereich ausgelegt ist, wobei die mindestens drei Lichtstrahlungen eine feste Phasenbeziehung zueinander haben.

10. THz-Laserquelle nach einem der vorhergehenden Ansprüche, wobei der Atomübergang ein Atomübergang von Jod ist.

11. Verfahren zum Aussenden einerTHz-Lichtstrahlung, das die folgenden Schritte umfasst:
- Erzeugen, durch einen ersten Generator (1), einer ersten Lichtstrahlung (i) mit der Frequenz w₁ = n wₐ und einer zweiten Lichtstrahlung (ii) mit der Frequenz w₂ = m wₐ, wobei n und m ganze Zahlen gleich oder größer als 1 sind und wₐ eine erste Referenzfrequenz ist;
- Erzeugen, durch einen zweiten Generator (2), einer ersten Lichtstrahlung (iii) mit der Frequenz w₃ = 1 w_{b} und einer zweiten Lichtstrahlung (iv) mit der Frequenz w₄ = p w_{b}, wobei p eine ganze Zahl gleich oder größer als 1 ist und w_{b} eine zweite Referenzfrequenz ist, die sich von wₐ unterscheidet;
- Bilden, durch die ersten Strahlungen, welche von jedem von dem ersten und dem zweiten Generator ausgesendet werden, einer THz-Lichtstrahlung (v), mit einer Frequenz gleich w₅ = n wₐ - ℓ w_{b}, und die zwischen 0,3 THz und 10 THz liegt;
- Frequenzstabilisieren mindestens einer der vom ersten oder zweiten Generator ausgesendeten zweiten Strahlungen.

12. Verfahren zum Aussenden einer THz-Laserstrahlung nach Anspruch 11, das ferner die folgenden Schritte umfasst:
- Erzeugen, durch den ersten Generator (1), mindestens einer dritten Lichtstrahlung (vi) mit der Frequenz w₆ = q wₐ, wobei q eine ganze Zahl gleich oder größer als 1 ist;
- Erzeugen, durch den zweiten Generator (2), mindestens einer dritten Lichtstrahlung (vii) mit der Frequenz w₇ = r w_{b}, wobei r eine ganze Zahl gleich oder größer als 1 ist, wobei q wₐ - r w_{b} ein Vielfaches oder Subvielfaches von n wₐ - ℓ w_{b} ist;
- Messen von q wₐ - r w_{b}, um davon die Frequenz der erzeugten THz-Strahlung abzuleiten.

13. Verfahren zum Aussenden einer THz-Laserstrahlung nach einem der Ansprüche 11 und 12, das ferner die folgenden Schritte umfasst:
- Ändern mindestens einer der ersten und zweiten Referenzfrequenzen (wₐ und/oder w_{b});
- Stabilisieren mindestens einer der von dem ersten und dem zweiten Generator ausgesendeten ersten Lichtstrahlungen auf mindestens einem zweiten Atomübergang.

14. Verfahren zum Aussenden einer THz-Laserstrahlung nach Anspruch 11, das die folgenden Schritte umfasst:
- Frequenzstabilisieren der von einem ersten der Generatoren ausgesendeten zweiten Strahlung bei auf Atomübergang; und
- Servosteuern des zweiten Generators an den ersten Generator.

## Claims

1. A THz laser source (10) comprising:
- a first generator (1) suitable for emitting at least one first light emission (i) of frequency w1 = n wₐ and one second light emission (ii) of frequency w2 = m wₐ, where n and m are integers higher than or equal to 1 and where wₐ is a first reference frequency;
- a second generator (2) suitable for emitting at least one first light emission (iii) of frequency w₃ = ℓ w_{b} and one second light emission (iv) of frequency w₄ = p w_{b}, wherein ℓ and p are integers higher than or equal to 1 and where w_{b} is a second reference frequency different from the first reference frequency wₐ; and
- a nonlinear crystal (3) suitable and arranged for forming, from said first light emissions emitted by each of the first and second generators, a THz light emission (v) generated by frequency difference, of frequency equal to w₅ = n wₐ - ℓ w_{b} and comprised between 0.3 THz and 10 THz;
- at least one first frequency-stabilizing module configured to allow the frequency of one of said second emissions emitted by one of the first and second generators to be stabilized on an atomic transition.

2. The THz laser source as claimed in claim 1, comprising first and second frequency-stabilizing modules each configured to allow the frequency of the second light emission emitted by each of the first and second generators, respectively, to be stabilized on an atomic transition.

3. The THz laser source as claimed in claim 2, wherein
- the first generator (1) is suitable for emitting at least one third light emission (vi) of frequency w₆ = q wₐ, where q is an integer higher than or equal to 1;
- the second generator (2) is suitable for emitting at least one third light emission (vii) of frequency w7 = r wb, where r is an integer higher than or equal to 1, with q wₐ - r w_{b} a multiple or submultiple of n wₐ - ℓ w_{b}.

4. The THz laser source as claimed in claim 3, further comprising a frequency comparator (7) suitable for receiving the third emissions emitted by each of the first and second generators and a reference signal (S₁) of given frequency (f₀), in order to deliver a radiofrequency resultant signal (S₂) the frequency of which allows the frequency difference between said third emissions to be determined.

5. The THz laser source as claimed in any one of claims 2 to 4, wherein the frequency of at least one of the first and second generators is tunable in a frequency range broader than the line width of the optical transition, allowing a tunable THz source to be formed.

6. The THz laser source as claimed in claim 1, comprising:
- a first frequency-stabilizing module (5) configured to allow the frequency of said second emission (ii) emitted by a first of said generators to be stabilized on an atomic transition; and
- a module (14) for servocontrolling the second generator to the first generator.

7. The THz laser source as claimed in claim 6, wherein:
- said first generator is suitable for emitting at least one third light emission (vi) of frequency w₆ = q wₐ, where q is an integer higher than or equal to 1;
- the servocontrolling module comprises:
∘ a first frequency comparator (7) suitable for receiving the third emission (vi) emitted by the first generator and the second emission emitted by the second generator and a first reference signal (S₁) of given frequency (f₀), in order to deliver a first radiofrequency signal (S₂); and
∘ a second frequency comparator (11) suitable for receiving said first radiofrequency signal (S₂) and a second radiofrequency reference signal (S₃) of given frequency (f₁), in order to deliver a control signal characteristic of the frequency difference between the frequencies of the first radiofrequency signal (S₂) and of the second radiofrequency reference signal (S₃);
∘ a module (13) for controlling the second generator depending on said control signal.

8. The THz laser source as claimed in claim 7, wherein the second generator is tunable and the frequency of the second radiofrequency reference signal (S₃) is variable in order to form a tunable THz source.

9. The THz laser source as claimed in any one of the preceding claims, wherein at least one of the first and second generators is a generator of "trident" type suitable for generating at least three light emissions of different frequencies in the visible and/or infrared, the at least three light emissions having a fixed phase relationship with one another.

10. The THz laser source as claimed in any one of the preceding claims, wherein said atomic transition is an atomic transition of iodine.

11. A method for emitting a THz light emission comprising the following steps:
- generating from a first generator (1) a first light emission (i) of frequency w₁ = n wₐ and a second light emission (ii) of frequency w₂ = m wₐ, wherein n and m are integers higher than or equal to 1 and where wₐ is a first reference frequency;
- generating from a second generator (2) a first light emission (iii) of frequency w₃ = 1 w_{b} and a second light emission (iv) of frequency w₄ = p w_{b}, where p is an integer higher than or equal to 1 and w_{b} is a second reference frequency different from wₐ;
- forming from said first emissions emitted by the first and second generators a THz light emission (v) generated by frequency difference, of frequency equal to w₅ = n wₐ - ℓ w_{b} and comprised between 0.3 THz and 10 THz;
- stabilizing the frequency of at least one of the second light emissions emitted by the first and second generators.

12. The method for emitting a THz laser emission as claimed in claim 11, further comprising the following steps:
- generating from the first generator (1) at least one third light emission (vi) of frequency w₆ = q wₐ, where q is an integer higher than or equal to 1;
- generating from the second generator (2) at least one third light emission (vii) of frequency w₇ = r w_{b}, where r is an integer higher than or equal to 1, with q wₐ - rw_{b} a multiple or submultiple of n wₐ - f w_{b};
- measuring q wₐ - r w_{b} in order to deduce therefrom the frequency of the THz emission generated.

13. The method for emitting a THz laser emission as claimed any one of claims 11 and 12, further comprising the following steps:
- varying at least one of the first and second reference frequencies (wₐ and/or w_{b});
- stabilizing at least one of the first light emissions emitted by the first and second generators on at least one second atomic transition.

14. The method for emitting a THz laser emission as claimed in claim 11, comprising the following steps:
- stabilizing the frequency of said second emission emitted by a first of said generators on an atomic transition; and
- servocontrolling the second generator to the first generator.
